(19) Europäisches Patentamt
European Patent Office
Office européen des brevets

(11) **EP 4 103 905 B1**

(12) **FASCICULE DE BREVET EUROPEEN**

(45) Date de publication et mention de la délivrance du brevet:
**10.04.2024 Bulletin 2024/15**

(21) Numéro de dépôt: **21704801.6**

(22) Date de dépôt: **12.02.2021**

(51) Classification Internationale des Brevets (IPC):
***G01B 11/06*** *(2006.01)*

(52) Classification Coopérative des Brevets (CPC):
**G01B 11/06**

(86) Numéro de dépôt international:
**PCT/EP2021/053553**

(87) Numéro de publication internationale:
**WO 2021/160861 (19.08.2021 Gazette 2021/33)**

(54) **PROCÉDÉ ET DISPOSITIF DE CARTOGRAPHIE D'ÉPAISSEUR D'UN OBJET**

VERFAHREN UND VORRICHTUNG ZUR ABBILDUNG DER DICKE EINES OBJEKTS

METHOD AND DEVICE FOR MAPPING THE THICKNESS OF AN OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2020 FR 2001474**

(43) Date de publication de la demande:
**21.12.2022 Bulletin 2022/51**

(73) Titulaires:
- **Centre national de la recherche scientifique
75016 Paris (FR)**
- **Université Grenoble Alpes
38400 Saint-Martin-d'Hères (FR)**

(72) Inventeurs:
- **GOURRIER, Aurélien
38960 St Etienne de Crossey (FR)**
- **MOREAU, Philippe
38240 MEYLAN (FR)**

(74) Mandataire: **Hautier IP
20, rue de la Liberté
06000 Nice (FR)**

(56) Documents cités:
**JP-A- H04 369 409**
**TW-A- 201 003 034**
**TW-A- 201 837 424**
**US-B1- 6 242 926**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 103 905 B1

## Description

### Domaine technique

La présente invention concerne un procédé pour établir une carte d'épaisseur d'un objet, notamment d'un objet chimiquement et physiquement hétérogène. Elle concerne également un dispositif de mesure sans contact mettant en oeuvre un tel procédé.

Le domaine de l'invention est, de manière non limitative, celui des mesures métrologiques sans contact et de l'imagerie topologique.

### État de la technique

Différents types de mesures de l'épaisseur d'objets sont connus, pouvant être classées en deux catégories : les mesures avec et sans contact.

Les techniques mécaniques de mesure d'épaisseur par contact reposent principalement sur l'application d'une pression de part et d'autre de l'objet à mesurer placé entre deux surfaces rigides d'un dispositif de mesure (par exemple entre une surface de référence et une pointe sphérique ou entre deux tiges planes). Une mesure moyenne de l'épaisseur de la zone de l'objet en contact avec les deux surfaces du dispositif est alors obtenue en mesurant le déplacement relatif de ces surfaces de contact après calibration (par exemple en définissant l'épaisseur nulle lorsque les deux surfaces de mesure de l'instrument sont en contact direct). Généralement, une des deux surfaces de contact est fixe et la mesure est déterminée par le déplacement de la deuxième. Les dispositifs tels que le pied à coulisse, micromètre ou marbre associé à un palpeur rentrent dans cette catégorie.

La précision des mesures d'épaisseur par contact dépend, en première approximation, de la calibration et de la qualité de mesure du déplacement d'une ou des deux surfaces de contact du dispositif. Cette précision dépend néanmoins de la dureté de l'objet et de la pression exercée par le dispositif de mesure. Dans le cas d'une force de contact importante et/ou d'une faible surface de contact, la pression appliquée sur l'objet peut induire des déformations plastiques qui faussent la mesure et endommagent l'objet. Ceci concerne notamment les objets mous (par exemple des polymères ou métaux malléables), les échantillons fragiles (par exemple des couches minces sur un substrat, des céramiques ou objets poreux).

Les mesures d'épaisseur sans contact permettent de résoudre ces problèmes d'endommagement de l'objet. Il existe une grande variété de procédés dont la caractéristique commune est la mesure de l'interaction entre une sonde et l'objet. Les principaux dispositifs utilisés reposent sur des mesures acoustiques, optiques, de rayonnement X ou de térahertz. La nature de la sonde et les technologies de détection associées déterminent essentiellement la précision de la mesure. Lorsque la précision requise sur l'épaisseur est importante, par exemple de l'ordre du micromètre, les solutions optiques sont souvent avantageuses.

TW 201837424 A et JP 4-369409 A décrivent tous deux un dispositif pour déterminer l'épaisseur d'un objet plat comprenant deux dispositifs de mesure laser de distance disposés de chaque côté de l'objet et déplacés de manière synchrone pour mesurer le même point.

Ces techniques de mesure d'épaisseur sans contact présentent cependant des limites selon la nature de l'objet. Ainsi, l'interférométrie optique est principalement réservée pour des mesures d'objets homogènes et transparents (par exemple des films plastiques) car elle est peu adaptée aux objets hétérogènes présentant des variations d'indice de réfraction. Des objets de nature hétérogène peuvent donc s'avérer plus compliqués à mesurer selon la nature de la sonde utilisée.

Lorsque l'épaisseur de l'objet n'est pas uniforme, il est nécessaire de mesurer l'objet en différentes positions. Le nombre de mesures à effectuer dépend de l'hypothèse faite sur la géométrie de l'objet. Afin d'obtenir une précision statistique suffisante, il est nécessaire de reconstituer une cartographie d'épaisseur de l'échantillon. Ceci peut notamment permettre de mettre en évidence des variations d'épaisseur d'objet non suspectées initialement ou, au contraire, lorsque des variations importantes d'épaisseur sont supposées localement.

Les technologies de mesure sans contact existantes ne permettent pas de réaliser des cartographies présentant à la fois un haut degré de précision sur l'épaisseur (de l'ordre d'au moins 1 $\mu$m) et une haute précision latérale (< 10 $\mu$m) pour des objets constitués de matériaux hétérogènes.

Le but de la présente invention est de disposer d'un procédé et d'un dispositif de cartographie de l'épaisseur d'un objet permettant de remédier à au moins un de ces inconvénients.

### Exposé de l'invention

Un but de la présente invention est de proposer un procédé et un dispositif permettant de cartographier, sans contact, l'épaisseur d'un objet pouvant être hétérogène.

Un autre but de la présente invention est de proposer un procédé et un dispositif permettant d'atteindre une précision sub-micrométrique pour l'épaisseur et une précision pour la carte de l'ordre de 10 $\mu$m ou inférieur.

Au moins un de ces buts est atteint avec un procédé pour établir une carte d'épaisseur d'un objet, le procédé étant mis en oeuvre par un dispositif de mesure sans contact comprenant :

- au moins une paire de voies de mesure, chaque voie de mesure comprenant une source lumineuse configurée pour produire un faisceau lumineux de mesure et un capteur optique configuré pour produire des mesures de distance,

- une zone d'accueil d'un objet à mesurer, la zone d'accueil comprenant un plan et/ou un axe objet,

dans lequel deux voies de mesure sont agencées de part et d'autre du plan et/ou de l'axe objet de sorte à pouvoir mesurer l'objet de deux côtés opposés, et de sorte à ce que les plans des voies de mesure, comprenant chacun la source lumineuse, le capteur optique et le faisceau lumineux, soient non parallèles ; ledit procédé comprenant les étapes suivantes :

- mesure, par les capteurs optiques, de la lumière réfléchie et/ou diffusée par les zones éclairées par les faisceaux lumineux de deux surfaces opposées d'un objet de référence d'épaisseur, $e_{REF}$, connue, pour obtenir un premier et un deuxième signal de référence des positions des deux surfaces de référence,
- mesure, par les capteurs optiques, de la lumière réfléchie et/ou diffusée par les zones éclairées par les faisceaux lumineux de deux surfaces opposées de l'objet à mesurer, pour obtenir un premier et un deuxième signal de mesure des positions des deux surfaces de l'objet, à une pluralité de points de mesure sur l'objet,
- détermination, à partir du premier et du deuxième signal de mesure et de l'épaisseur de référence, $e_{REF}$, d'une pluralité de valeurs d'épaisseur, e, pour la pluralité de points de mesure, et
- établissement d'une carte d'épaisseur de l'objet à partir de la pluralité des valeurs d'épaisseur de l'objet à mesurer,

les mesures (16) d'une surface de l'objet (4) étant désynchronisées des mesures (16) de l'autre surface de l'objet (4).Le procédé selon l'invention constitue un procédé de cartographie optique, sans contact, de l'épaisseur d'un objet. Le procédé selon l'invention permet de réaliser de l'imagerie topologique sur les deux surfaces de l'objet. Le procédé est basé sur la détection de la réflexion spéculaire ou diffuse d'une tache lumineuse sur chacune des surfaces opposées de l'objet pour déterminer la position de ces surfaces, en plusieurs points de mesure.

L'établissement d'une cartographie d'épaisseur est alors basé sur la répétition de la mesure d'épaisseur permettant de couvrir la zone d'intérêt de l'objet. Ceci peut être réalisé en déplaçant l'objet relativement aux sondes optiques, ou l'inverse. La précision obtenue sur l'épaisseur est donc indépendante du déplacement de la sonde ou de l'objet et dépend uniquement du système de mesure d'épaisseur, comprenant les voies de mesure. La précision de la cartographie, quant à elle, dépend à la fois de la dimension du système de mesure (par exemple la taille de la tache lumineuse sur la surface ce l'objet) et de l'espacement des points de mesure sur l'objet. L'espacement est déterminé par la technique de scan de l'objet selon les points de mesure. L'établissement d'une cartographie d'épaisseur s'apparente, dans ce cas, à une forme d'imagerie par balayage, souvent dénommée micro-imagerie.

La présente invention permet de combiner la précision intrinsèque aux résolutions optiques tout en s'affranchissant des problèmes de variations d'indices optiques au sein de l'objet qui limitent fortement l'utilisation de l'interférométrie optique.

L'objet peut notamment être étendu en deux dimensions, i.e. d'épaisseur faible devant les deux autres dimensions. L'objet peut donc être de type film, lame, section, plaque, présentant deux surfaces opposées, et dont l'épaisseur doit être déterminée sur une partie de ou toute son extension latérale et longitudinale. L'épaisseur de l'objet à mesurer est déterminée par mesure différentielle de la position de chacune des deux surfaces de l'objet.

L'objet peut également être un objet de symétrie cylindrique ou sphérique, tel que des tiges, câbles ou fils. Dans ce cas, les termes « deux côtés opposés » ou « deux surfaces opposées » s'entendent dans le sens où les voies de mesure, étant agencées de part et d'autre de l'objet, permettent de mesurer l'objet de ces deux côtés, même s'il s'agit d'une seule surface cylindrique par exemple.

Dans le procédé selon la présente invention, les mesures d'un côté de l'objet sont décalées dans le temps par rapport aux mesures de l'autre côté de l'objet. La combinaison de cette désynchronisation des mesures avec l'agencement des voies de mesure dans des plans non parallèles permet de bien identifier et donc distinguer les taches lumineuses venant de l'un ou de l'autre côté de l'objet. Les erreurs de détection peuvent être évitées et la précision des mesures peut ainsi être augmentée.

En effet, en évitant que le faisceau de mesure d'une voie de mesure ne soit détecté par une autre voie de mesure, des interférences de signaux entre les deux voies de mesure sont évitées.

Le procédé selon l'invention permet de cartographier l'épaisseur de tout type objet. Avantageusement, l'objet peut être hétérogène en composition chimique et/ou propriétés physiques. L'objet peut notamment comporter des zones transparentes et opaques ou des zones élastiques et dures ou fragiles, et présentant des variations spatiales de l'indice de réfraction, de l'absorption, etc. Le procédé selon l'invention permet notamment de cartographier l'épaisseur d'objets en matériaux composites, multiphasés ou biologiques, d'objets très fins et/ou partiellement transparents.

Dans le cas où l'objet présente des variations de hauteur sur partie de l'une ou l'autre des surfaces, la cartographie d'épaisseur s'apparente à une imagerie topographique. Un tel objet peut être de type carte électronique pour laquelle une visualisation de la géométrie des composants peut être cartographiée de part et d'autre de la carte grâce au procédé selon l'invention.

L'objet peut aussi posséder un axe de symétrie et peut présenter des variations d'épaisseur ou de hauteur suivant cet axe ou suivant son diamètre, tel qu'une vis, un tube, une carotte forée dans un objet, ou un implant chirurgical.

Les faisceaux de mesure sont adaptés pour pouvoir réaliser, avec leurs capteurs optiques respectifs, des mesures de distance, ou de position, sur un objet. Ceci implique que le diamètre ou l'extension latérale d'un faisceau de mesure est faible comparé à la taille ou la dimension de l'objet à mesurer.

Selon un mode de réalisation, une ou plusieurs paires de voies de mesure supplémentaires peuvent être mises en oeuvre dans le procédé selon l'invention. Ces paires supplémentaires permettent d'effectuer des mesures complémentaires par rapport à la première paire, de façon à pouvoir diminuer le temps de mesure pour un objet ou d'augmenter la précision de mesure.

De manière avantageuse, le procédé selon l'invention peut comprendre en outre une étape de corrélation des mesures d'épaisseur aux positions des points de mesure correspondants des deux côtés de l'objet.

Cette étape permet de garantir que deux mesures correspondantes de part et d'autre de l'objet sont utilisées pour la détermination d'une valeur d'épaisseur.

Selon un exemple, l'étape de corrélation peut être réalisée en calibrant la position d'un des capteurs optiques par rapport à la position de l'autre capteur optique au moyen d'un objet de résolution de référence.

Selon un autre exemple, l'étape de corrélation peut être réalisée en corrélant les mesures du premier côté de l'objet à mesurer avec les mesures du deuxième côté de l'objet pour au moins une partie de la pluralité des points de mesure.

Selon un mode de réalisation, le procédé peut comprendre en outre une étape d'interpolation des valeurs d'épaisseur déterminées pour au moins une partie de la pluralité des points de mesure. Ainsi, la carte d'épaisseur est définie même aux endroits de l'objet où l'épaisseur n'a pas été mesurée.

Suivant un autre aspect de l'invention, il est proposé un dispositif pour établir une carte d'épaisseur d'un objet, comprenant :

- au moins une paire de voies de mesure, chaque voie de mesure comprenant une source lumineuse configurée pour produire un faisceau lumineux de mesure et un capteur optique configuré pour produire des mesures de distance ;
- une zone d'accueil d'un objet à mesurer, la zone d'accueil comprenant un plan et/ou un axe objet, dans lequel les deux voies de mesure sont agencées de part et d'autre du plan objet et/ou de l'axe objet de sorte à pouvoir mesurer l'objet de deux côtés opposés et de sorte à ce que les plans des voies de mesure, comprenant chacun la source lumineuse, le capteur optique et le faisceau lumineux, soient non parallèles ;
- des moyens de déplacement configurés pour déplacer l'objet, dans le plan objet et/ou selon de l'axe objet, relativement aux voies de mesure, ou des moyens de déplacement configurés pour déplacer les voies de mesure, de part et d'autre du plan objet et/ou de l'axe objet, relativement à l'objet ; et
- un module de traitement configuré pour traiter les mesures de distance ;

agencés pour mettre en oeuvre toutes les étapes du procédé selon l'invention.

De manière avantageuse, chaque voie de mesure peut comprendre une source lumineuse produisant un faisceau de mesure quasi parallèle ou focalisé.

Cette source lumineuse est de préférence une source laser.

Selon un mode de réalisation avantageux, chaque capteur optique peut comprendre un ou plusieurs éléments optiques de refocalisation de type trou sténopéïque (*pinhole* en langue anglaise) ou lentille et un capteur de position.

Le capteur de position peut être, par exemple, un capteur de type CMOS ou CCD.

Le procédé et le dispositif selon l'invention peuvent être mis en oeuvre notamment pour une mesure métrologique de cartographie de l'épaisseur d'échantillons biologiques, tels que des lames histologiques, pour le développement de biomatériaux ou pour le contrôle de qualité dans le domaine des matériaux.

## Description des figures et modes de réalisation

D'autres avantages et caractéristiques apparaîtront à l'examen de la description détaillée d'exemples nullement limitatifs, et des dessins annexés sur lesquels :

- la Figure 1 est une représentation schématique d'un exemple de réalisation non-limitatif d'un dispositif selon la présente invention ;
- la Figure 2 est une représentation schématique d'un exemple de réalisation non-limitatif d'un procédé selon la présente invention ;
- les Figures 3a à 3d illustrent des étapes du procédé selon des modes de réalisation de l'invention ; et
- la Figure 4 illustre encore une autre étape du procédé selon des modes de réalisation de l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

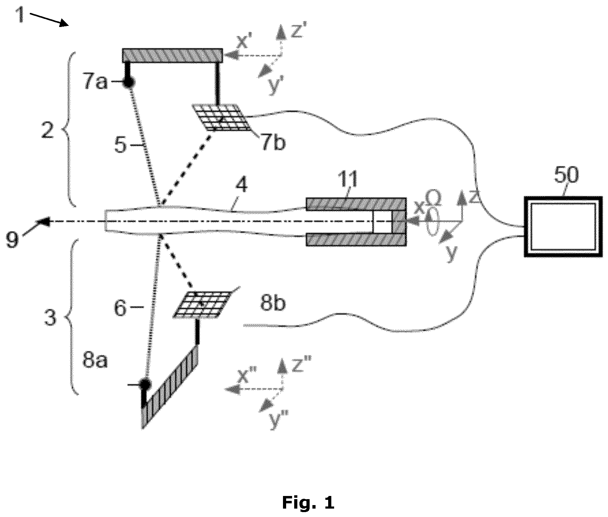

La Figure 1 est une représentation schématique d'un exemple de réalisation non-limitatif d'un dispositif selon la présente invention.

Le dispositif selon la présente invention est agencé pour mesurer l'épaisseur d'un objet et établir une cartographie de l'épaisseur de l'objet.

L'objet 4 peut être un objet étendu suivant un ou deux axes. La Figure 1 montre une coupe d'un objet 4 étendu selon un axe objet 9 (correspondant à l'axe x ici). Il peut s'agir notamment d'une lame d'histologie ou un film en matériaux composites ou en biomatériaux. Plus généralement, l'objet peut être un échantillon fragile, élastique et/ou hétérogène.

Le dispositif 1 comprend deux voies de mesure 2, 3. Chaque voie de mesure 2, 3 comprend une source lumineuse 7a, 8a, émettant un faisceau lumineux de mesure 5, 6 qui peut être collimaté ou focalisé, et un capteur optique 7b, 8b de distance.

La source lumineuse 7a, 8a peut être un laser dont le faisceau est mis en forme par une ou plusieurs lentilles et/ou collimateurs (non représentés).

Dans le mode de réalisation représenté, les capteurs optiques 7b, 8b permettent une détection de la position d'un faisceau lumineux réfléchi ou diffusé. Ces capteurs peuvent être, par exemple, des diodes basées sur la technologie CMOS (en anglais, *Complementary Métal Oxide Semiconductor*). Pour focaliser le faisceau réfléchi ou diffusé sur le détecteur et ainsi détecter la position de la tache lumineuse à la surface de l'échantillon, un système de lentilles ou de trous sténopéïques (non représentés) est agencé devant le capteur 7b, 8b.

Une zone d'accueil est agencée entre les deux voies de mesure 2, 3 du dispositif 1. La zone d'accueil permet d'accueillir l'objet à mesurer 4. Elle est matérialisée, par exemple, par un support 11 permettant de fixer l'objet. La zone d'accueil est agencée de sorte à ce que lorsque l'objet 4 y est présent, une réflexion spéculaire ou diffuse d'un faisceau de mesure peut être produite et détectée sur chacune des deux côtés opposés de l'objet 4. Sur chacun des capteurs optiques apparait alors une tache lumineuse à une certaine position de celui-ci.

De préférence, la source lumineuse 7a, 8a et le capteur optique 7b, 8b se trouvent dans un même module ou tête de capteur 7, 8. Ces têtes de capteur 7, 8 sont simplement agencées tête-bêche de façon à pouvoir disposer un objet à mesurer 4 entre ces têtes 7, 8 pour qu'elles se trouvent de part et d'autre de l'objet à mesurer 4.

Bien entendu, les sources lumineuses 7a, 8a et les capteurs optiques 7b, 8b peuvent également constituer des modules indépendants.

Dans le mode de réalisation représenté sur la Figure 1, les têtes de capteur 7, 8 sont agencés de manière non parallèle. Les plans de voie de mesure ou de tête de capteur, formés respectivement par la source de lumière 7a, 8a, le capteur optique 7b, 8b et le faisceau de mesure 5, 6, sont perpendiculaires l'un par rapport à l'autre. L'une des têtes de mesure est agencée selon le plan x'-z' et l'autre selon le plan y"-z".

Cependant, d'autres configurations non symétriques par rapport à un plan objet 9 et avec les plans des têtes ou voies de mesure non parallèles, sont bien entendu envisageables pour le dispositif 1.

Le dispositif 1 comprend des moyens de déplacement permettant de déplacer l'objet 4 suivant l'axe x et/ou l'axe y relativement aux voies de mesure. Un rotation $\Omega$ autour de l'axe x peut aussi être envisagée pour des objets approximativement cylindriques. Ceci permet de déplacer les taches lumineuses produites par les faisceaux de mesure 5, 6 sur les deux côtés de l'objet, et ainsi de réaliser des mesures d'épaisseur à différents endroits de l'objet. Le support 11 de l'objet peut faire partie des moyens de déplacement.

Alternativement, les moyens de déplacement peuvent être agencés pour déplacer les deux capteurs suivant les référentiels x'-y'-z' et x"-y"-z", l'objet 4 étant fixe.

Le dispositif 1 selon l'invention comprend également un module de traitement 50. Le module de traitement 50 permet de déterminer, à partir des mesures effectuées par les capteurs optiques 7, 8, des valeurs d'épaisseur à différents endroits de l'objet 4, afin de produire une carte d'épaisseur de l'objet 4. Ce module de traitement 50 peut comprendre un microcontrôleur, une unité centrale ou de calcul, un microprocesseur, et/ou des moyens logiciels adaptés.

Le dispositif selon l'invention est configuré pour mettre en oeuvre toutes les étapes d'un procédé selon l'invention pour établir une carte d'épaisseur d'un objet.

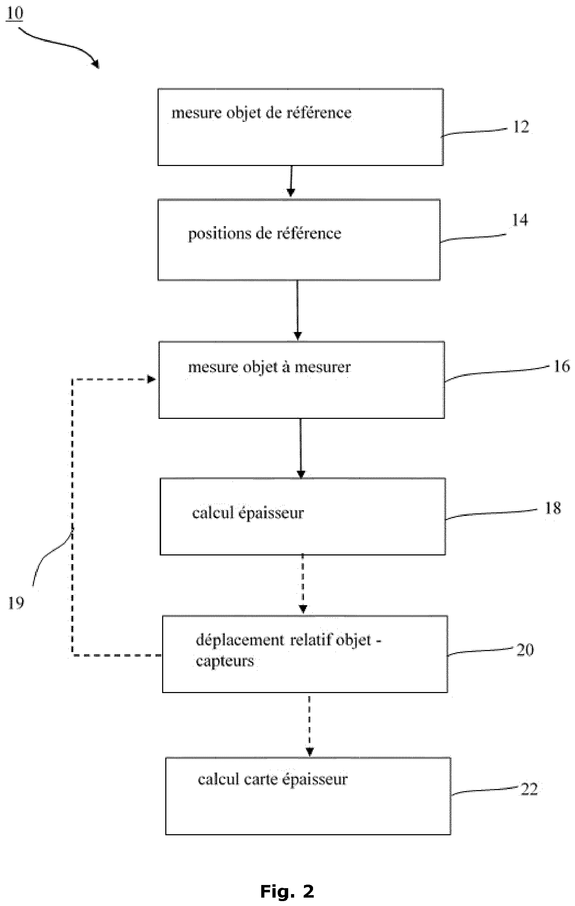

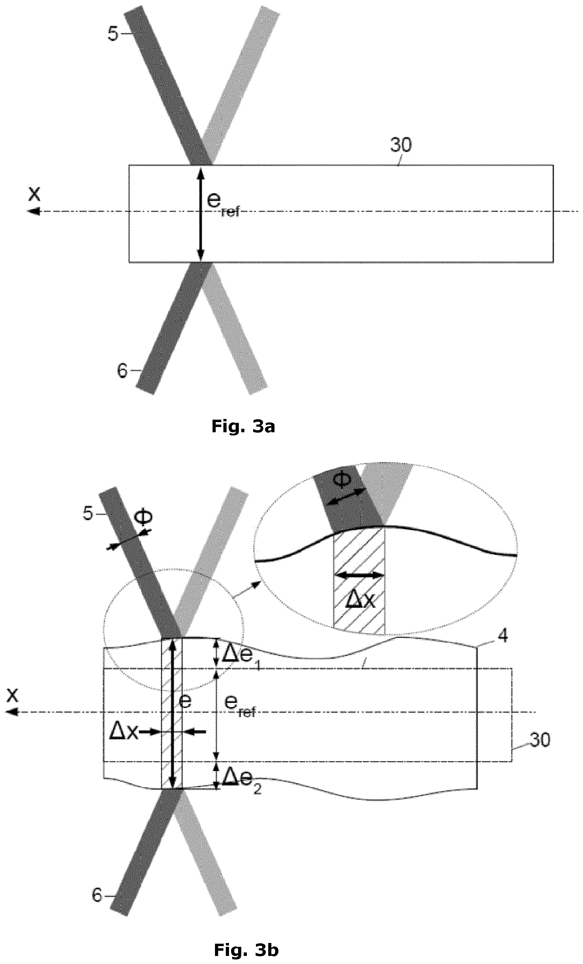

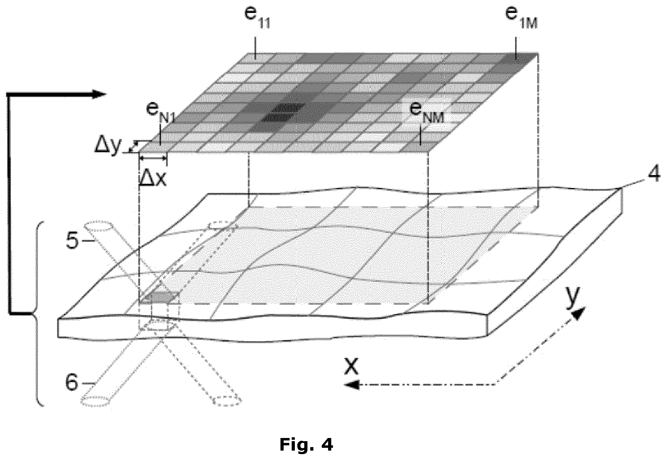

Le dispositif 1 selon le mode de réalisation représenté sur la Figure peut notamment être utilisé pour mettre en oeuvre les étapes du procédé pour établir une carte de l'épaisseur selon l'invention qui seront décrites par la suite. Le procédé selon des modes de réalisation de l'invention sera décrit en référence aux Figures 2, 3a, 3b, 3c, 3d et 4. Dans les Figures 3a à 3d et 4, les faisceaux de mesure et les faisceaux réfléchis et/ou diffusés sont illustrés dans le plan x-z uniquement pour plus de lisibilité. Cependant, les plans des têtes ou voies de mesure du dispositif 1 sont toujours dans des plans non parallèles.

La Figure 2 est une représentation schématique d'un exemple de réalisation non-limitatif d'un procédé de mesure selon l'invention.

Le procédé 10 comprend une étape 12 de mesure, par les capteurs optiques, de la lumière réfléchie et/ou diffusée d'un objet de référence.

L'objet de référence 30, illustré sur la Figure 3a, peut être, par exemple, une cale étalon consistant en une lame ayant deux surfaces parallèles opposées d'épaisseur certifiée. La cale étalon peut être en plastique, céramique, silicium, etc.

De chacun des deux côtes opposées de l'objet de référence 30, la lumière réfléchie et/ou diffusée est mesurée à un point de mesure. Les capteurs optiques 7b, 8b détectent ainsi un premier et un deuxième signal de référence, respectivement.

Le signal de référence correspond à une tache lumineuse détectée à une position déterminée de chaque surface de l'objet de référence 30 et donc à une position déterminée sur le capteur optique 7b, 8b. L'épaisseur $e_{REF}$ de l'objet de référence 30 et les positions des sources lumineuses 7a, 8a et des capteurs optiques 7b, 8b étant connues, il est alors possible de calibrer les positions des capteurs optiques 7b, 8b par rapport à cette épaisseur de référence $e_{REF}$.

Lors d'une étape 16 du procédé 10 représenté sur la Figure 2, l'objet de référence 30 est remplacé par un objet 4 pour être mesuré. Cette étape 16 de mesure de l'objet 4 est représentée sur la Figure 3b.

La lumière réfléchie et/ou diffusée de chaque côté de l'objet à mesurer 4 est détectée par les capteurs optiques 7b, 8b ainsi que la position des taches lumineuses sur les détecteurs 7b, 8b. Les positions des taches lumineuses sont déterminées par rapport aux positions des taches lumineuses pour l'objet de référence 30. On obtient ainsi un premier et un deuxième signal de mesure, respectivement.

En fonction de la nature de l'objet à mesurer (opacité, homogénéité, etc.), il est possible que les capteurs optiques captent non seulement la lumière réfléchie et/ou diffusée des surfaces extérieures de l'objet, mais également de la lumière réfléchie et/ou diffusée de l'intérieur de l'objet, par exemple par des interfaces qui séparent différentes zones dans l'objet (transparent/opaque, zones ayant des densités ou en matériaux différente). Une possibilité pour discriminer ces différentes taches lumineuses et ne choisir que celle venant de la surface extérieure, seulement la tache la plus intense peut être prise en compte par le capteur. D'autres techniques de discrimination peuvent bien entendu être utilisées.

Lors d'une étape 18 du procédé 10, une valeur d'épaisseur e de l'objet à mesurer 4 est déterminée à partir de la variation $\Delta e_1$ du premier et la variation $\Delta e_2$ du deuxième signal de mesure par rapport à l'épaisseur de référence $e_{REF}$ de la façon suivante :

$$e = e_{REF} + \Delta e_1 + \Delta e_2.$$

Cette étape 18 est également illustrée sur la Figure 3b.

Afin de pouvoir réaliser l'étape 18 de détermination précisément, il est nécessaire de garantir que chaque capteur détecte la tache lumineuse se trouvant sur le côté de l'objet qui lui fait face et donc la lumière venant de la source correspondante.

Pour ce faire, une séparation spatiale (ou angulaire) des mesures est réalisée en évitant de diriger le faisceau de mesure de l'une des têtes de capteurs vers le capteur de l'autre tête de capteur. Pour ce faire, les têtes de capteur se trouvent dans des plans non parallèles, comme expliqué ci-dessus en référence à la Figure 1. Aussi, les faisceaux de mesure ne sont pas parallèles.

Une séparation temporelle des mesures est également réalisée. Les mesures d'un côté de l'objet sont ainsi décalées dans le temps, ou désynchronisées, par rapport aux mesures de l'autre côté de l'objet. De préférence, pour chaque point de mesure, la mesure est d'abord effectuée d'un côté de l'objet et ensuite de l'autre côté. D'autres types de désynchronisation sont bien entendu possibles.

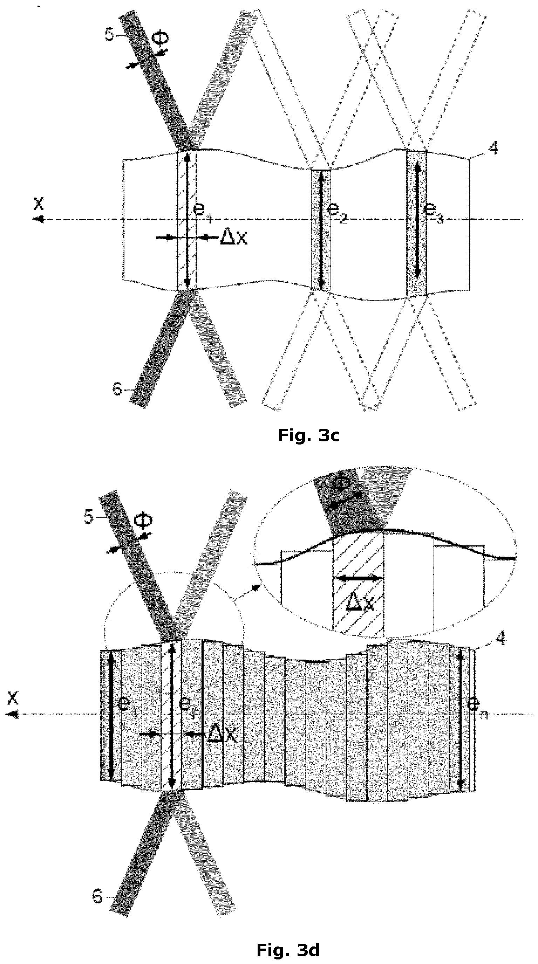

Les étapes de mesure 16 sur l'objet et de calcul 18 de l'épaisseur e sont effectuées pour une pluralité de points de mesure sur l'objet 4, pour obtenir une pluralité de valeurs d'épaisseur ($e_1$, $e_2$, $e_3$, etc.). Pour cela, lors d'une étape 20 de déplacement du procédé, l'objet 4 est déplacé relativement par rapport aux faisceaux 5, 6 de mesure, suivant l'axe x et/ou y, et ce aussi souvent que nécessaire. Le déplacement suivant l'axe x est illustré sur la Figure 3c. Les étapes de mesure 16 et de calcul 18 peuvent alors être réitérées aussi souvent que souhaité.

Le déplacement peut être réalisé en déplaçant soit l'objet 4, soit l'ensemble des sources et capteurs, suivant l'axe x et/ou l'axe y. Le choix du mode de déplacement dépend notamment de la nature et des dimensions de l'objet.

Dans le cas d'un objet cylindrique, l'objet est de préférence placé avec son axe selon l'axe x. Le déplacement relatif s'effectue en couplant une translation le long de l'axe de l'objet et une rotation autour de cet axe. L'utilisation de deux voies de mesure permet de limiter la rotation à 180 degrés.

Bien entendu, pour pouvoir déterminer l'épaisseur de l'objet 4 pour la pluralité des points de mesure, ceux-ci doivent être distribués sur les deux faces mesurées de l'objet de manière identique.

L'enchainement des étapes de mesure 16, de calcul 18 de l'épaisseur et de déplacement 20 peut être réalisé selon différentes façons.

Selon un premier exemple, comme représenté sur la Figure 2, une réitération 19 des étapes de mesure 16, de calcul 18 et de déplacement 20 est réalisée de manière à effectuer ces étapes 16, 18, 20 l'une après l'autre pour chaque point de mesure d'une pluralité de points de mesure. Ce mode de réalisation du procédé 10 permet notamment d'obtenir une image de l'épaisseur de l'objet en temps réel, au cours de la mesure.

Selon un deuxième exemple, l'étape 16 de mesure de l'objet est d'abord réalisée pour chacun des points de mesure, en déplaçant l'objet relativement par rapport aux voies de mesure avant chaque nouvelle mesure. On obtient un nuage des points mesurés pour chaque côté de l'objet. Ensuite, toutes les mesures sont utilisées pour calculer l'épaisseur de l'objet pour tous les points de mesure et ainsi obtenir une carte d'épaisseur de l'objet.

A partir de la pluralité de valeurs d'épaisseur, une carte d'épaisseur de l'objet est établie lors d'une étape 22 du procédé 10, en corrélant la pluralité de valeurs d'épaisseur avec le déplacement relatif de l'objet. La carte d'épaisseur correspond à une image de l'objet mesuré 4 représentant l'épaisseur à tous les points mesurés.

La précision obtenue sur l'épaisseur dépend de la précision de la mesure et de celle définie pour la cale étalon. La résolution latérale de la cartographie dépend d'une combinaison de facteurs dont la dimension Ø des faisceaux de mesure 5, 6 qui définit une résolution latérale $\Delta x$ sur l'échantillon, et l'écart entre les divers points de mesure. Une plus grande précision sera obtenue pour la cartographie si l'objet 4 est déplacé plus finement dans le faisceau, comme illustré sur la Figure 3d. La cartographie d'épaisseur représente ainsi une approximation de l'espace entre les deux surfaces réelles de l'objet 4 entre les deux faisceaux de mesure 5, 6.

Ce principe est illustré sur la Figure 4. Un objet plan 4 étendu en deux dimensions et irrégulier en épaisseur est cartographié par les deux voies de mesure, représentées par les faisceaux de mesure 5, 6 en pointillé. L'épaisseur $e_{ij}$ d'un volume élémentaire de l'objet 4 est donc mesuré suivant une grille de déplacements de distances $\Delta x$ et $\Delta y$ dans le plan objet, ou i et j correspondent aux indices matriciels de la grille de la cartographie ($1 < i < M$, $1 < j < N$). Les distances $\Delta x$ et $\Delta y$ représentent ici, en première approximation, la projection du diamètre de la tache lumineuse du faisceau 5, 6 à la surface de l'objet 4. De par la symétrie de l'agencement, ces valeurs $\Delta x$ et $\Delta y$ sont approximativement identiques de part et d'autre de l'objet. La zone de l'objet 4 scannée est indiquée en pointillé à la surface supérieure de l'objet 4. Pour chaque volume élémentaire, une valeur d'épaisseur $e_{ij}$ est calculée. Une image de l'épaisseur de l'objet correspondant au schéma de la grille peut ainsi être obtenue comprenant l'ensemble des points de mesures $e_{ij}$.

Selon des modes de réalisation, l'étape 22 de calcul de la carte d'épaisseur du procédé 10 selon l'invention peut également comprendre une étape d'interpolation. Pendant cette étape, les valeurs d'épaisseur obtenues à partir de la pluralité de paires de points mesurés sont utilisées pour déterminer d'autres valeurs d'épaisseur par interpolation des valeurs mesurées.

Il est alors possible de mettre en oeuvre différents motifs de points de mesure, et notamment des motifs irréguliers, et d'obtenir une carte d'épaisseur complète grâce à l'étape d'interpolation. L'étape d'interpolation permet aussi d'établir la carte d'épaisseur malgré des mesures non exploitables devant être rejetées.

Pour pouvoir attribuer à chaque point mesuré d'un côté de l'objet un point mesuré correspondant de l'autre côté, le procédé 10 peut comprendre en outre une étape de corrélation pour corréler les deux nuages de points mesurés.

Selon un mode de réalisation du procédé 10, l'étape de corrélation 6 est réalisée en calibrant les positions des deux capteurs optiques. Pour cela, on peut utiliser, comme objet de référence, un objet de résolution ayant une géométrie bien connue. Cet objet de résolution peut être constitué, par exemple, d'une gravure de dimensions bien déterminées de part et d'autre d'une cale étalon. La gravure peut aussi être un trou traversant. Dans tous les cas, la géométrie de l'objet de résolution doit être connue avec une précision au moins équivalente aux dimensions latérales des faisceaux de mesure 5, 6. Les mesures des deux côtés de l'objet de résolution par les deux capteurs, respectivement, sont utilisées pour référencer les positions des deux capteurs l'un par rapport à l'autre.

Selon un autre mode de réalisation, l'étape de corrélation est réalisée en corrélant les mesures du premier côté de l'objet à mesurer avec les mesures du deuxième côté de l'objet pour au moins deux/une partie de la pluralité des points de mesure. La corrélation selon ce mode de réalisation correspond à de la corrélation d'images. Les points mesurés pour chaque côté de l'objet à mesurer forment un nuage de points pour chaque côté. Les deux nuages peuvent être comparés pour identifier des caractéristiques spécifiques communs, comme par exemple les bords de l'objet ou tout autre repère géométrique de position connue de part et d'autre de l'objet. Ainsi, il est possible d'associer un point mesuré d'un bord pour un côté de l'objet avec un point mesuré correspondant pour l'autre côté de l'objet. Ceci permet ensuite d'associer tous les autres points mesurés correspondants. La détermination des différentes valeurs d'épaisseur peut alors être effectuée avec les paires de points appropriées.

Bien sûr, l'invention n'est pas limitée aux exemples qui viennent d'être décrits et de nombreux aménagements peuvent être apportés à ces exemples sans sortir du cadre de l'invention.

## Revendications

**1.** Procédé (10) pour établir une carte d'épaisseur d'un objet, le procédé (10) étant mis en oeuvre par un dispositif (1) de mesure sans contact comprenant :

- au moins une paire de voies de mesure (2, 3), chaque voie de mesure (2, 3) comprenant une source lumineuse (7a, 8a) configurée pour produire un faisceau lumineux de mesure (5, 6) et un capteur optique (7b, 8b) configuré pour produire des mesures de distance,
- une zone d'accueil d'un objet à mesurer (4), la zone d'accueil comprenant un plan et/ou un axe objet (9),

dans lequel deux voies de mesure (2, 3) sont agencées de part et d'autre du plan objet et/ou de l'axe objet (9) de sorte à pouvoir mesurer l'objet (4) de deux côtés opposés, et de sorte à ce que les plans des voies de mesure (7,8), comprenant chacun la source lumineuse (7a, 8a), le capteur optique (7b, 8b) et le faisceau lumineux (5, 6), soient non parallèles ;
**caractérisé en ce que** ledit procédé (10) comprend les étapes suivantes :

- mesure (12), par les capteurs optiques (7b, 8b), de la lumière réfléchie et/ou diffusée par les zones éclairées par les faisceaux lumineux de deux surfaces opposées d'un objet de référence (30) d'épaisseur, $e_{REF}$, connue, pour obtenir un premier et un deuxième signal de référence des positions des deux surfaces de référence,
- mesure (16), par les capteurs optiques (7b, 8b), de la lumière réfléchie et/ou diffusée par les zones éclairées par les faisceaux lumineux de deux surfaces opposées de l'objet à mesurer (4), pour obtenir un premier et un deuxième signal de mesure des positions des deux surfaces de l'objet (4), à une pluralité de points de mesure sur l'objet (4),
- détermination (18), à partir du premier et du deuxième signal de mesure et de l'épaisseur de référence, $e_{REF}$, d'une pluralité de valeurs d'épaisseur, e, pour la pluralité de points de mesure, et
- établissement (22) d'une carte d'épaisseur de l'objet (4) à partir de la pluralité des valeurs d'épaisseur de l'objet à mesurer (4),

les mesures (16) d'une surface de l'objet (4) étant désynchronisées des mesures (16) de l'autre surface de l'objet (4).

2. Procédé (10) selon la revendication précédente, **caractérisé en ce qu'**il comprend en outre une étape de corrélation des mesures d'épaisseur aux positions des points de mesure correspondants des deux côtés de l'objet (4).

3. Procédé (10) selon la revendication 2, **caractérisé en ce que** l'étape de corrélation est réalisée en calibrant la position d'un des capteurs optiques (7b, 8b) par rapport à la position de l'autre capteur optique (7b, 8b) au moyen d'un objet de résolution de référence.

4. Procédé (10) selon l'une quelconque des revendications précédentes, **caractérisé en ce que** les étapes de détermination (18) de valeurs d'épaisseur de l'objet (4) et d'établissement (22) de la carte d'épaisseur sont réalisées en temps réel.

5. Procédé (10) selon la revendication 2, **caractérisé en ce que** l'étape de corrélation est réalisée en corrélant les mesures du premier côté de l'objet (4) à mesurer avec les mesures du deuxième côté de l'objet (4) pour au moins une partie de la pluralité des points de mesure.

6. Procédé (10) selon l'une quelconque des revendications précédentes, **caractérisé en ce qu'**il comprend en outre une étape d'interpolation des valeurs d'épaisseur déterminées pour au moins une partie de la pluralité des points de mesure.

7. Dispositif (1) pour établir une carte d'épaisseur d'un objet, comprenant :

- au moins une paire de voies de mesure (2, 3), chaque voie de mesure (2, 3) comprenant une source lumineuse (7a, 8a) configurée pour produire un faisceau lumineux de mesure (5, 6) et un capteur optique (7b, 8b) configuré pour produire des mesures de distance ;
- une zone d'accueil d'un objet à mesurer (4), la zone d'accueil comprenant un plan et/ou un axe objet (9), dans lequel les deux voies de mesure (2, 3) sont agencées de part et d'autre du plan objet et/ou de l'axe objet (9) de sorte à pouvoir mesurer l'objet (4) de deux côtés opposés et de sorte à ce que les plans des voies de mesure (7,8), comprenant chacun la source lumineuse (7a, 8a), le capteur optique (7b, 8b) et le faisceau lumineux (5, 6), soient non parallèles ;
- des moyens de déplacement (11) configurés pour déplacer l'objet (4), dans le plan objet et/ou selon de l'axe objet (9), relativement aux voies de mesure, ou des moyens de déplacement configurés pour déplacer les voies de mesure, de part et d'autre du plan objet et/ou de l'axe objet (9), relativement à l'objet (4) ; et
- un module de traitement (50) configuré pour traiter les mesures de distance ;

agencés pour mettre en oeuvre toutes les étapes du procédé (10) selon l'une quelconque des revendications précédentes.

8. Dispositif (1) selon la revendication précédente, **caractérisé en ce que** chaque voie de mesure (2, 3) comprend une source lumineuse (7a, 8a), de préférence un laser, produisant un faisceau de mesure (5, 6) quasi parallèle ou focalisé.

9. Dispositif (1) selon l'une quelconque des revendications 7 et 8, **caractérisé en ce que** chaque capteur optique (7b, 8b) comprend un ou plusieurs éléments optiques de refocalisation de type trou sténopéïque ou lentille et un capteur de position.

## Patentansprüche

1. Verfahren (10) zum Erstellen einer Dickenkarte eines Objekts, wobei das Verfahren (10) von einer Vorrichtung (1) zur berührungslosen Messung implementiert wird, welche umfasst:

   - mindestens ein Paar Messkanäle (2, 3), wobei jeder Messkanal (2, 3) eine Lichtquelle (7a, 8a), die so konfiguriert ist, dass sie einen Messlichtstrahl (5, 6) erzeugt, und einen optischen Sensor (7b, 8b) umfasst, der so konfiguriert ist, dass er Abstandsmessungen erzeugt,
   - einen Aufnahmebereich für ein zu messendes Objekt (4), wobei der Aufnahmebereich eine Objektebene und/oder eine Objektachse (9) umfasst,

   wobei zwei Messkanäle (2, 3) zu beiden Seiten der Objektebene und/oder der Objektachse (9) so eingerichtet sind, dass das Objekt (4) von zwei gegenüberliegenden Seiten gemessen werden kann, und so, dass die Ebenen der Messkanäle (7, 8), die jeweils die Lichtquelle (7a, 8a), den optischen Sensor (7b, 8b) und den Lichtstrahl (5, 6) umfassen, nicht parallel sind;
   **dadurch gekennzeichnet, dass** das Verfahren (10) die folgenden Schritte umfasst:

   - Messen (12), durch die optischen Sensoren (7b, 8b), des Lichts, das von den durch die Lichtstrahlen beleuchteten Bereichen zweier gegenüberliegender Oberflächen eines Referenzobjekts (30) mit bekannter Dicke, $e_{REF}$, reflektiert und/oder gestreut wird, um ein erstes und ein zweites Referenzsignal der Positionen der zwei Referenzoberflächen zu erhalten,
   - Messen (16), durch die optischen Sensoren (7b, 8b), des Lichts, das von den durch die Lichtstrahlen beleuchteten Bereichen zweier gegenüberliegender Oberflächen des zu messenden Objekts (4) reflektiert und/oder gestreut wird, um ein erstes und ein zweites Messsignal der Positionen der zwei Oberflächen des Objekts (4) zu erhalten, an einer Vielzahl von Messpunkten auf dem Objekt (4),
   - Bestimmen (18), auf Grundlage des ersten und des zweiten Messsignals und der Referenzdicke, $e_{REF}$, einer Vielzahl von Dickenwerten, e, für die Vielzahl von Messpunkten, und
   - Erstellen (22) einer Dickenkarte des Objekts (4) auf Grundlage der Vielzahl der Dickenwerte des zu messenden Objekts (4),

   wobei die Messungen (16) einer Oberfläche des Objekts (4) von den Messungen (16) der anderen Oberfläche des Objekts (4) desynchronisiert sind.

2. Verfahren (10) nach dem vorstehenden Anspruch, **dadurch gekennzeichnet, dass** es weiter einen Schritt des Korrelierens der Dickenmessungen an den Positionen der entsprechenden Messpunkte der zwei Seiten des Objekts (4) umfasst.

3. Verfahren (10) nach Anspruch 2, **dadurch gekennzeichnet, dass** der Schritt des Korrelierens unter Kalibrieren der Position eines der optischen Sensoren (7b, 8b) in Bezug auf die Position des anderen optischen Sensors (7b, 8b) mittels eines Referenzauflösungsobjekts ausgeführt wird.

4. Verfahren (10) nach einem der vorstehenden Ansprüche, **dadurch gekennzeichnet, dass** die Schritte des Bestimmens (18) von Dickenwerten des Objekts (4) und des Erstellens (22) der Dickenkarte in Echtzeit ausgeführt werden.

5. Verfahren (10) nach Anspruch 2, **dadurch gekennzeichnet, dass** der Schritt des Korrelierens unter Korrelieren, für mindestens einen Teil der Vielzahl der Messpunkte, der Messungen der ersten Seite des zu messenden Objekts (4) mit den Messungen der zweiten Seite des Objekts (4) ausgeführt wird.

6. Verfahren (10) nach einem der vorstehenden Ansprüche, **dadurch gekennzeichnet, dass** es für mindestens einen Teil der Vielzahl der Messpunkte weiter einen Schritt des Interpolierens der bestimmten Dickenwerte umfasst.

7. Vorrichtung (1) zum Erstellen einer Dickenkarte eines Objekts, umfassend:

   - mindestens ein Paar Messkanäle (2, 3), wobei jeder Messkanal (2, 3) eine Lichtquelle (7a, 8a), die so konfiguriert ist, dass sie einen Messlichtstrahl (5, 6) erzeugt, und einen optischen Sensor (7b, 8b) umfasst, der so konfiguriert ist, dass er Abstandsmessungen erzeugt;
   - einen Aufnahmebereich für ein zu messendes Objekt (4), wobei der Aufnahmebereich eine Objektebene und/oder eine Objektachse (9) umfasst, wobei die zwei Messkanäle (2, 3) zu beiden Seiten der Objektebene und/oder der Objektachse (9) so eingerichtet sind, dass das Objekt (4) von zwei gegenüberliegenden Seiten gemessen werden kann, und so, dass die Ebenen der Messkanäle (7, 8), die jeweils die Lichtquelle (7a, 8a), den optischen Sensor (7b, 8b) und den Lichtstrahl (5, 6) umfassen, nicht parallel sind;
   - Bewegungsmittel (11), die so konfiguriert sind, dass sie das Objekt (4) in der Objektebene und/oder entlang der Objektachse (9) relativ zu den Messkanälen bewegen, oder Bewegungsmittel, die so konfiguriert sind, dass sie die Messkanäle zu beiden Seiten der Objektebene und/oder der Objektachse (9) relativ zum Objekt (4) bewegen; und
- ein Verarbeitungsmodul (50), das so konfiguriert ist, dass es die Abstandsmessungen verarbeitet;

die so eingerichtet sind, dass sie alle Schritte des Verfahrens (10) nach einem der vorstehenden Ansprüche implementieren.

8. Vorrichtung (1) nach dem vorstehenden Anspruch, **dadurch gekennzeichnet, dass** jeder Messkanal (2, 3) eine Lichtquelle (7a, 8a), vorzugsweise einen Laser, umfasst, die einen quasi-parallelen oder fokussierten Messstrahl (5, 6) erzeugt.

9. Vorrichtung (1) nach einem der Ansprüche 7 und 8, **dadurch gekennzeichnet, dass** jeder optische Sensor (7b, 8b) ein oder mehrere optische Refokussierungselemente vom Typ einer stenopäischen Lücke oder Linse und einen Positionssensor umfasst.

## Claims

1. A method (10) for establishing a thickness map of an object, the method (10) being implemented by a contactless measuring device (1) comprising:

- at least one pair of measuring channels (2, 3), each measuring channel (2, 3) comprising a light source (7a, 8a) configured to produce a measuring light beam (5, 6) and an optical sensor (7b, 8b) configured to produce distance measurements,
- a reception zone for an object to be measured (4), the reception zone comprising an object plane and/or axis (9), wherein two measuring channels (2, 3) are arranged on either side of the object plane and/or the object axis (9) so as to be able to measure the object (4) from two opposite sides, and so that the planes of the measuring channels (7, 8), each comprising the light source (7a, 8a), the optical sensor (7b, 8b) and the light beam (5, 6), are non-parallel; **characterised in that** said method (10) comprises the following steps:
- measuring (12), by the optical sensors (7b, 8b), the light reflected and/or scattered by the zones illuminated by the light beams of two opposite surfaces of a reference object (30) of thickness, $e_{REF}$, which is known, to obtain a first and a second reference signal of the positions of the two reference surfaces,
- measuring (16), by the optical sensors (7b, 8b), the light reflected and/or scattered by the zones illuminated by the light beams of two opposite surfaces of the object to be measured (4), to obtain a first and a second signal for measuring the positions of the two surfaces of the object (4), at a plurality of measurement points on the object (4),
- determining (18), from the first and the second measurement signal and the reference thickness, $e_{REF}$, a plurality of thickness values, e, for the plurality of measurement points, and
- establishing (22) a thickness map of the object (4) from the plurality of thickness values of the object to be measured (4),

the measurements (16) of one surface of the object (4) being desynchronised from the measurements (16) of the other surface of the object (4).

2. The method (10) according to the preceding claim, **characterised in that** it further comprises a step of correlating the thickness measurements to the positions of the corresponding measurement points on both sides of the object (4).

3. The method (10) according to claim 2, **characterised in that** the correlation step is carried out by calibrating the position of one of the optical sensors (7b, 8b) relative to the position of the other optical sensor (7b, 8b) by means of a reference resolution object.

4. The method (10) according to any one of the preceding claims, **characterised in that** the steps of determining (18) thickness values of the object (4) and establishing (22) the thickness map are carried out in real time.

5. The method (10) according to claim 2, **characterised in that** the correlation step is carried out by correlating the measurements of the first side of the object (4) to be measured with the measurements of the second side of the object (4) for at least part of the plurality of measurement points.

6. The method (10) according to any one of the preceding claims, **characterised in that** it further comprises a step of interpolation of the thickness values determined for at least part of the plurality of measurement points.

7. A device (1) for establishing a thickness map of an object, comprising:

- at least one pair of measuring channels (2, 3), each measuring channel (2, 3) comprising a light source (7a, 8a) configured to produce a measuring light beam (5, 6) and an optical sensor (7b, 8b) configured to produce distance measurements;
- a reception zone for an object to be measured (4), the reception zone comprising an object plane and/or axis (9), wherein the two measuring channels (2, 3) are arranged on either side of the object plane and/or the object axis (9) so as to be able to measure the object (4) from two opposite sides, and so that the planes of the measuring channels (7, 8), each comprising the light source (7a, 8a), the optical sensor (7b, 8b) and the light beam (5, 6), are non-parallel;
- movement means (11) configured to move the object (4), in the object plane and/or along the object axis (9), relative to the measuring channels, or movement means configured to move the measuring channels, on either side of the object plane and/or the object axis (9), relative to the object (4); and
- a processing module (50) configured to process the distance measurements;

arranged to implement all the steps of the method (10) according to any one of the preceding claims.

**8.** The device (1) according to the preceding claim, **characterised in that** each measuring channel (2, 3) comprises a light source (7a, 8a), preferably a laser, producing a measurement beam (5, 6) almost parallel or focused.

**9.** The device (1) according to any one of claims 7 and 8, **characterised in that** each optical sensor (7b, 8b) comprises one or more optical refocusing elements of pinhole or lens type and a position sensor.

1
x'
z'
y'
7a
2
5
7b
11
4
50
9
x
Ω
z
y
3
6
8b
8a
x"
z"
y"

**Fig. 1**

10
mesure objet de référence
12
positions de référence
14
mesure objet à mesurer
16
calcul épaisseur
18
19
déplacement relatif objet - capteurs
20
calcul carte épaisseur
22

**Fig. 2**

5
30
X
$e_{ref}$
6

Fig. 3a

5
Φ
Φ
Δx
4
$\Delta e_1$
X
e
$e_{ref}$
Δx
30
$\Delta e_2$
6

Fig. 3b

5
Φ
4
X
$e_1$
$e_2$
$e_3$
Δx
6

**Fig. 3c**

Φ
5
Φ
Δx
4
X
$e_1$
$e_i$
$e_n$
Δx
6

**Fig. 3d**

$e_{11}$
$e_{1M}$
$e_{N1}$
$e_{NM}$
Δy
Δx
4
5
6
y
x

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- TW 201837424 A
- JP 4369409 A